# Europäisches Patentamt

(19) **European Patent Office**

**Office européen des brevets**

(11) Publication number: **0 287 725**
**B1**

(12) # EUROPEAN PATENT SPECIFICATION

(45) Date of publication of the patent specification:
**16.08.90**

(51) Int. Cl.⁵: **G01N 22/04**

(21) Application number: **87303579.4**

(22) Date of filing: **23.04.87**

(54) Method for measuring properties of sheet- or foil-like materials of low electrical conductivity.

(43) Date of publication of application:
**26.10.88 Bulletin 88/43**

(45) Publication of the grant of the patent:
**16.08.90 Bulletin 90/33**

(84) Designated Contracting States:
**AT BE CH DE ES FR GB GR IT LI LU NL SE**

(56) References cited:
**DE-A- 3 133 012**
**DE-B- 2 340 130**
**GB-A- 1 030 834**
**GB-A- 1 106 185**
**GB-A- 1 520 894**
**US-A- 3 460 031**

**IEEE TRANSACTIONS ON INSTRUMENTATION AND MEASUREMENT, vol. IM-36, no. 4, December 1987; P.V. VAINIKAINEN et al.: "Radiowave sensor for measuring the properties of dielectric sheets: Application to veneer moisture content and mass per unit area measurement"ispiels von Romachkino-Rohöl. II." epitaxy" 000**

(73) Proprietor: **IMATRAN VOIMA OY, Malminkatu 16, SF-00100 Helsinki 10(FI)**

(72) Inventor: **Nyfors, Ebbe Gustaf, Soukankuja 16 C 51, FI-02360 Espoo(FI)**
Inventor: **Vainikainen, Pertti-Veli, Hauhontie 6 B 8, FI-00550 Helsinki(FI)**
Inventor: **Fischer, Matti Torsten, Toolonkatu 54 as. 8, FI-00250 Helsinki(FI)**

(74) Representative: **Foster, David Martyn et al, MATHISEN MACARA & CO. The Coach House 6-8 Swakeleys Road, Ickenham Uxbridge UB10 8BZ(GB)**

## Description

The present invention concerns a method for determining properties of planar or foil-like materials of high moisture content and low electrical conductivity.

The application of conventional measurement equipment in the determination of properties of sheet- and foil-like materials moving rapidly on a production line is often difficult. The transducers used are mainly of a contacting type, such as humidity sensors for plywood, based on resistance measurement, or sheet basis weight measuring scales. Typically, the contacting transducers e.g. capacitive sensors, are susceptible to a high measurement error by the vertical movement of the material. Transducers based on penetrating radiation, such as gamma rays, often have a slow response, are expensive, and, furthermore, are hazardous due to the ionizing radiation utilized. In contrast, a nonpenetrating radiation, such as infrared radiation, delivers only superficial information from the immediate surface of the material.

With the use of radio frequency radiation, many of the aforementioned drawbacks and sources of error can be eliminated. The noncontact measurement of material becomes feasible, and the measurement also conveys information about the inside of the material sheet. Due to the inexpensive nature of the transducer construction itself, several transducers can be advantageously mounted parallel to each other, which facilitates a fast measurement across the entire line. Furthermore, by measuring a plurality of factors related to the propagation of radio waves in the material, a concurrent determination of material characteristics is possible.

For example, DE-A 2 340 130 discloses the use of TE modes whose resonance frequencies and Q's are dependent on the properties of the material while GB-A 1 520 894 discloses the use of two resonator halves excited in TE modes in order to determine the change of resonant frequency and loses caused by a sheet of material, that is, the dielectric Qc. However, even when using RF transducers, the movement of the sheet or foil relative to the transducer often causes lare errors in measurement since, in the measurement of thin sheets or foils, the transducer must be brought close enough to the material to obtain a sufficiently strong signal.

The aim of this invention is to overcome the drawbacks of the above described technique and to provide a novel measurement method for the determination of characteristics in sheet- or foil-like materials of low electrical conductivity and high moisture content.

The invention is based on the use of a transducer which consists of parts located at both sides of the material, which together form an electromagnetic quasi-TEM transmission line resonator with several center conductors. Here, the construction supports several resonant wave modes, whose Q and resonant frequency are dependent on the material since its dielectric constant differs from that of air. By selecting an appropriate mode, these measurement signals can be maximized while the effect of material movement on the signals is minimized.

More specifically, the features of the method in accordance with the invention are defined in claim 1.

The invention provides appreciable benefits. For example, the measurement method in accordance with the invention operating in the RF range can be used for the concurrent determination of one or more properties of a sheet-or foil-like material. The material may be any material of low electrical conductivity, such as plywood sheet, plastic or cellulose seeet, or paper web. The material passes through the transducer without contacting it, which facilitates a rapid automatic measurement, and even relatively large displacements perpendicular to the plane of the material sheet or foil do not appreciably affect the measurement result.

Examples of the method in accordance with the invention will now be described with reference to the accompanying drawings, in which:

Figure 1 shows a side view of a measurement transducer constructed of two ground planes, two center conductors, and isolating spacer supports;

Figure 2 shows a bottom plan view of a part of the measurement transducer shown in Figure 1;

Figure 3 shows a bottom plan view of a butterfly-shaped center conductor of an alternative measurement transducer;

Figure 4 shows the electrical field in the wave propagation direction for an even mode of a measurement resonator with two center conductors;

Figure 5 shows the electrical field in the wave propagation direction for an odd mode of a measurement resonator with two center conductors;

Figure 6 shows the relative resonance frequency change of measurement resonators in accordance with Figures 1 to 5 as a function of plywood sheet position; and,

Figure 7 shows in a graph form the relative frequency change of the odd resonant mode as a function of the dielectric coefficient.

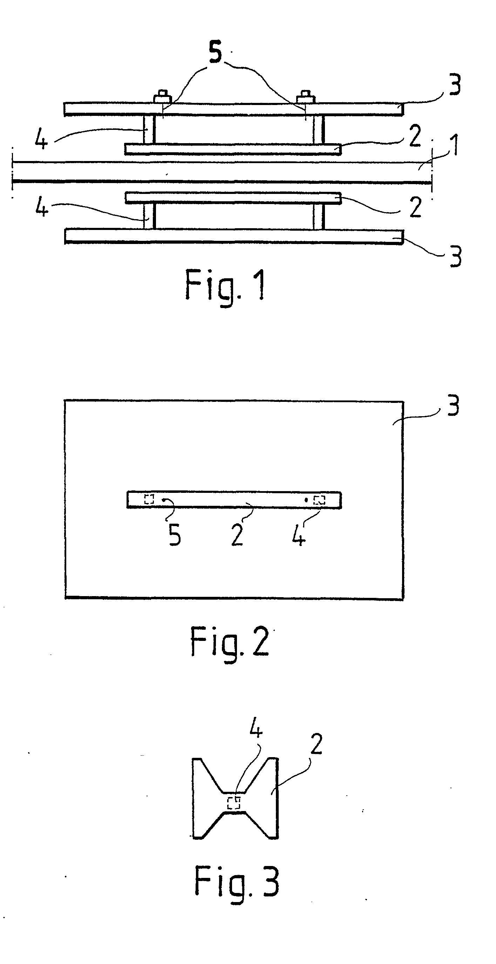

Transducers applicable to the measurement of characteristics of sheet-or foil-like materials having low electrical conductivity in accordance with a method embodying the invention, are shown in Figures 1 to 5. The transducer illustrated in the figures is comprised of two ground planes 3 and, in this example, of two center conductors 2 (strip, pipe, etc.) as well as insulator spacers 4 used for supporting the center conductors. The material 1 to be measured is located to the middle of the center conductors so that the material plane is parallel to the ground plane. The ground planes and the center conductors together form an electromagnetic resonator, in which the electromagnetic wave propagates parallel to the level of the material to be measured.

The resonator illustrated in Figures 1 and 2 is resonant when the wavelength is twice the length of the center conductors 2. The dielectric sheet between the center conductors 2 alters the wavelength and, consequently, also the resonant frequency of the construction. The material also attenuates the fields, which can be detected from the change of the resonator Q. Information from the characteristics of the resonance can be obtained by connecting the resonator to a measurement circuit via coupling pins or loops 5.

When the distance between the center conductors of the resonator in accordance with Figures 1 to 5 is increased without changing their spacing from the ground planes 3, the sensitivity of the transducer is reduced against the vertical displacements of the material 1 to be measured. However, the Q and the measurement sensitivity are then also decreased. By contrast, when the spacing of the center conductors 2 from the ground planes is increased without altering the mutual distance of the center conductors, the measurement sensitivity is increased while Q is decreased. The sensitivity to the vertical movement of material is not affected. A sufficient value for Q, which is about 500, is attained by choosing the spacings of the center conductors 2 to the ground planes 3 to be about 0.12 times the wavelength, and the mutual distance between the center conductors to be about 0.15 times the wavelength. Then, the measurement sensitivity provided by the transducer is relatively high, and its sensitivity to the vertical movement of the material is low.

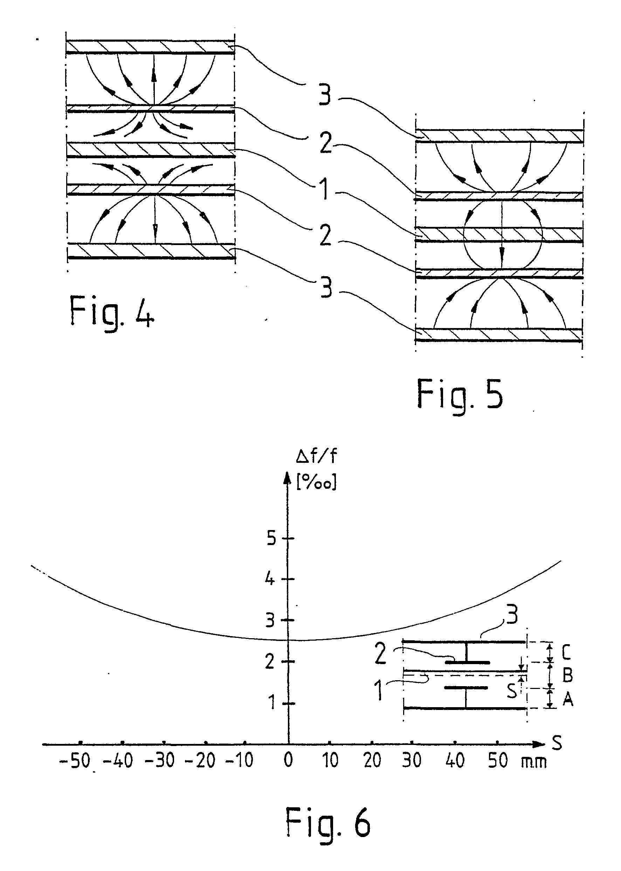

Quasi-TEM transmission line resonators with several center conductors, such as the resonator illustrated in Figures 1...5, support several resonant modes at different potential combinations of center conductors. In regard to the resonator with two center conductors, the situation can be described as the resonator supporting an even mode with the center conductors being equipotential and an odd mode with the center conductors having opposite potentials. Due to slightly different discontinuity capacitances, the resonant frequencies of the even and odd modes of same order are generally slightly displaced. Correspondingly, the field patterns are distinctly different in the plane orthogonal to the wave propagation direction of the even and odd resonant mode. The electric field pattern of the even mode is shown in Figure 4, and the corresponding electric field pattern of the odd mode in Figure 5. It can be seen in the figures that when the thin sheet or foil to be measured is located to the middle of the center conductors 2, the electric field at the location of the sheet to be measured is parallel to the plane of the sheet 1 for the even mode while being orthogonal to the sheet 1 for the odd mode. Hence, the relative changes in the resonant frequency and Q of the resonator caused by the sheet to be measured, compared to the unloaded resonator, are distinctly higher with the even mode than with the odd mode.

Furthermore, the change in measurement signals caused by the vertical movement of the sheet to be measured is distinctly smaller than with the odd mode. An example of this is illustrated in Figure 6, in which the relative frequency change of the even mode is presented for a resonator used in a method in accordance with the invention, as compared to the change in the unloaded resonator when the plywood sheet in the resonator is moved vertically.

The vertical axis is the relative change of resonant frequency and the horizontal axis is the displacement of the sheet position from the midpoint of the transducer. The dimension A of the transducer shown in the figure is typically 100 mm, dimension B is 125 mm, and dimension C is 100 mm.

To measure the moisture content of, for instance, a plywood sheet, the following approach can be applied. A measurement is performed using the resonator illustrated in Figures 1–5 in order to determine the change of resonant frequency and losses caused by the sheet, that is, the dielectric Qc. It can be shown that the following equation is valid for the different resonant modes:

$$\frac{1/Q_c}{(f_0-f_1)/f_0} = \frac{c''}{(c')^n(c'-1)}$$

where $f_0$ is the resonant frequency of the unloaded resonator, $f_1$ the resonant frequency with the sheet inserted between the center conductors as indicated by Figures 4 and 5, $c'$ is the real part of the sheet dielectric constant, and $c''$ is the imaginary part of the sheet dielectric constant. Constant $n$ is 0 for the even mode and 1 for the odd mode. Consequently, the parameter calculated from the lift side of the equation is not dependent on the thickness of the material sheet, such as plywood. Furthermore, the parameter is generally dependent only to a minor extent on the material density. However, the parameter is dependent on the moisture content of the material, e.g., wood, which offers a method for determining the moisture content. The equation also shows that by measuring a parameter of the left side for both the even ($n = 0$) and the odd ($n = 1$) mode, and by further calculating the ratio of these parameters, the real part of the dielectric constant of the material sheet or foil is obtained. By again using either of the parameters obtained for the different resonant modes, the imaginary part of the dielectric constant is also determined with neither result being dependent on the thickness of sheet to be measured.

Both the resonant frequency and the measurement range of the transducer can be influenced by the shape of the center conductors 2 of the resonator. For instance, a star center conductor with a butterfly-shaped cross section in accordance with Figure 3 results in a resonant frequency which is half that of a strip-shaped center conductor with the same length. The lower resonant frequency allows, for instance, a wider distance between the center conductors, resulting in lower sensitivity to the vertical movement of the material. The measurement area of the transducer extends outside the edges of the center conductors to a distance approximately one-third of the mutual distance between the center conductors, thus resulting in a shorter and wider area of measurement for the butterfly-shaped center conductors compared to the strip-shaped center conductors of constant width. The center conductors 2 illustrated in Figures 1 to 5 are electrically open-circuited at both ends. However, the center conductors 2 can be short-circuited at both ends or at either end to the ground plane 3 without significantly altering their operation. The ground planes 3 must extend in the cross direction by at least a third-wavelength outside the edges of the center conductors to prevent radiation from the resonator.

Using conventional techniques, the resonant frequency and Q can be measured at least 50 times a second, which facilitates the determination of properties in a relatively fast moving material. By shaping the center conductors described in the foregoing, the measurement area of the transducer can be influenced, facilitating a focused determination of material properties. The facilities are important, for instance, in determining moisture content in plywood sheets because the sheet is thin; when dry, its dielectric constant is close to that of air; and after drying, the sheet is often extremely undulated. Furthermore, considering that the transfer speed of the sheet on the production line is relatively high, up to 3 m/s, and information on the moisture content is desired at a resolution of 30 x 30 cm² across the entire 1.5 m width of the line, a measurement rate of the aforementioned 50 measurement per second may be required.

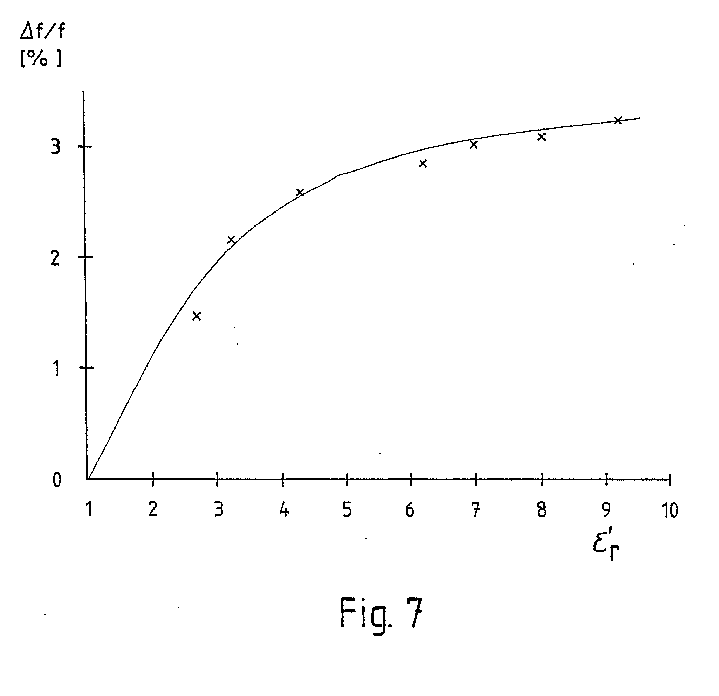

The changes in resonant frequency caused by the material 1 to be measured, are different for the different resonant modes. Thus, the frequency change for the even mode is directly proportional to the parameter $c_r-1$, and for the odd mode, to the parameter $(c_r-1)/c_r'$ (refer to Figure 7). When the moisture content in the material 1 to be measured is high, the real part of the dielectric constant $c_r'$ is also high. Then, according to the foregoing equation, small changes in moisture content of the wet material 1 cause no significant frequency change for the odd mode. Since, by contrast, the resonant frequency change for the even mode is appreciable, the effect of error factors can be compensated for. Such error factors are, for instance, the vertical movement of the measured object 1 relative to the transducer, changes in the mutual distance between the center conductors 2, and dimensional changes of the transducer parts due to temperature changes. If the moisture content of the material to be measured is high and the variations in moisture content are small, the aforementioned measurement error can be reduced. To reduce the measurement errors, the resonant frequencies of both resonant modes can be measured simultaneously. Then, the different resonant modes can be distinguished in the measurement setup from the different resonant frequencies characteristic of the modes. The error compensation can be simply performed by subtracting the resonant frequencies of the modes from each other. However, the compensation is not complete because the effect of error sources on the resonant frequencies of the different modes is not equal. The effectiveness of compensation depends on how well the effect of the error sources can be arranged equal on the different resonant modes. By choosing the mutual distance between the center conductors 2 and the spacing of the ground planes 3 from the center conductors 2 appropriately, the effect of error sources can be decreased significantly. An example of this, error in measurement of paper moisture content was reduced to one-third by compensation when the distance between the center conductors 2 was chosen as 5 cm, and the spacing of the ground planes 3 from the center conductors 2 was chosen as 6 cm. The moisture content of paper was 58 % on the average, and its variation range was ±2.5 %-units.

In the application referred to in the foregoing, the measurement frequencies used were in the order of 350 MHz. Information from the characteristics of the resonance is obtained by feeding the RF signal to coupling pins 5 or corresponding coupling loops, and then measuring the resonant frequencies. The resonant frequencies are found by, for instance, sweeping over the frequency range of the resonator and then determining the amplitude maxima of the signal.

## Claims

A method of measuring properties of sheet- or foil-like materials (1) of high moisture content and low electrical conductivity, characterized in that ground planes (3) are arranged on both sides of the material (1) to be measured; that at least one centre conductor (2) is arranged between each ground plane (3) and the material (1) to be measured approximately parallel to the material in order to form a quasi-TEM transmission line resonator; that electromagnetic RF energy is supplied to the quasi-TEM transmission line resonator so that the quasi-TEM modes propagate parallel to the material (10) to be measured, and the resonator supports resonant modes of both transverse and longitudinal modes whose resonant frequencies and Q's are dependent on the properties of the material (1) to be measured; and that the resonant frequencies and related Q's are measured, the resonant frequencies of at least two resonant modes being measured substantially simultaneously and the difference between at least two resonant frequencies determined to represent a moisture value proportional to that of the material (1) to be measured.

## Patentansprüche

Verfahren zum Messen von Eigenschaften von blatt- oder folienartigen Materialien (1) mit hohem Feuchtigkeitsgehalt und niedriger elektrischer Leitfähigkeit, dadurch gekennzeichnet, daß Masseflächen (3) auf beiden Seiten des zu messenden Materials (1) angeordnet werden; daß zumindest ein Mittenleiter (2) zwischen jeder Massefläche (3) und dem zu messenden Material (1) ungefähr parallel zum Material (1) angeordnet wird, um einen Quasi-TEM-Wellenleiterresonator zu bilden; daß elektromagnetische HF-Energie dem Quasi-TEM-Wellenleiterresonator zugeführt wird, so daß sich Quasi-TEM-Moden parallel zum zu messenden Material (1) ausbreiten, und der Resonator Resonanzmoden sowohl von den Transversal- als auch von den Longitudinalmoden aufrechterhält, deren Resonanzfrequenzen und Güte-Werte Q von den Eigenschaften des zu messenden Materials (1) abhängig sind; und daß die Resonanzfrequenzen und zugehörigen Güte-Werte Q gemessen werden, wobei die Resonanzfrequenzen von zumindest zwei Resonanzmoden im wesentlichen gleichzeitig gemessen werden und die Differenz zwischen zumindest zwei Resonanzfrequenzen bestimmt wird, um einen Feuchtigkeitswert darzustellen, der proportional jenem des zu messenden Materials (1) ist.

## Revendications

Procédé pour mesurer des propriétés de matériaux (1) en forme de feuilles ou de pellicules, ayant une forte teneur en humidité et une faible conductivité électrique, caractérisé en ce qu'il comprend la disposition de plans de masse (3) des deux côtés du matériau (1) à mesurer; la disposition d'au moins un conducteur central (2) entre chaque plan de masse (3) et le matériau (1) à mesurer, à peu près parallèlement au matériau (1), de manière à former un résonateur de ligne de transmission quasi-TEM; l'alimentation de ce résonateur en énergie électromagnétique radiofréquence, de manière que les modes quasi-TEM se propagent parallèlement au matériau (1) à mesurer et que le résonateur soutienne des modes résonnants à la fois des modes transversaux et des modes longitudinaux dont les fréquences de résonance et les facteurs Q dépendent des propriétés du matériau (1) à mesurer; de même que la mesure des fréquences de résonance et des Q qui s'y rapportent, les fréquences de résonance d'au moins deux modes résonnants étant mesurées sensiblement en même temps et la différence entre au moins deux fréquences de résonance étant déterminée pour représenter la valeur d'humidité proportionnelle à celle du matériau (1) à mesurer.

Fig. 1

Fig. 2

Fig. 3

Fig. 4

Fig. 5

Fig. 6

Fig. 7